# EUROPÄISCHE PATENTSCHRIFT

(11) **EP 0 897 818 B1**
(45) Veröffentlichungstag und Bekanntmachung des Hinweises auf die Patenterteilung: **11.12.2002**
(21) Anmeldenummer: 98106044.5
(22) Anmeldetag: 02.04.1998
(51) Int. Cl.: B60J 3/02

(54) **Sonnenblende für Fahrzeuge**
Sun visor for vehicle
Pare-soleil pour véhicules

(30) Priorität: 22.07.1997 DE 19731393
(43) Veröffentlichungstag der Anmeldung: 24.02.1999
(73) Patentinhaber: Johnson Controls Interiors GmbH & Co. KG, 42285 Wuppertal (DE)
(72) Erfinder: Viertel, Lothar, 66802 Altforweiler (DE); Welter, Patrick, 57730 La Chambre (FR)
(74) Vertreter: Hemmelmann, Klaus

(56) Entgegenhaltungen:
- EP-A- 0 231 440
- EP-A- 0 562 085
- EP-A- 0 938 991
- DE-A- 3 402 416

## Beschreibung

Die Erfindung bezieht sich auf eine Sonnenblende für Fahrzeuge mit einem Sonnenblendenkörper aus Kunststoffmaterial, der an einem Längsrandbereich einen sich über seine wesentliche Längenausdehnung erstreckenden Rohrkörper aus Metall, wie Aluminium aufweist, welcher den Sonnenblendenkörper stabilisiert und als Führung für einen mit einer Achse verbundenen Gleitkörper dient, der für eine axiale Verschiebbarkeit des Sonnenblendenkörpers vorgesehen ist.

Eine Sonnenblende der gattungsgemäßen Art ist in der EP 0 231 440 B1 gezeigt und beschrieben. Bei der bekannten Sonnenblende, die sich in der Praxis hervorragend bewährt hat, ist der Rohrkörper im Bereich der oberen Längskante des Sonnenblendenkörpers eingelagert, d.h. vom Kunststoffmaterial umgeben. Die bekannte Sonnenblende weist dadurch eine Dicke auf, die den heutigen Vorstellungen der Abnehmerschaft nicht mehr entspricht. Um die Dicke der Sonnenblendenkörper in Grenzen zu halten, werden sie aus einem PU-Material gefertigt, weil dieses Material mit relativ geringer Deckschicht den Rohrkörper ohne Lunkerstellen zu umschäumen vermag. Nun ist aber ein PU-Material kein solches, welches von den Automobilherstellern bevorzugt wird, weil Kunststoffmaterialien zur Verfügung stehen, die besondere Vorteil in bezug auf ihr Raumgewicht und ihre Recyclebarkeit aufweisen. Diese Kunststoffmaterialien lassen sich aber nicht mit äußerst geringer Schichtdicke um den Rohrkörper herumformen, so daß sich wieder das Problem der unerwünschten Dicke des Sonnenblendenkörpers ergibt.

Der vorliegenden Erfindung liegt demgemäß die Aufgabe zugrunde, eine Sonnenblende der eingangs genannten Art mit einem Sonnenblendenkörper zur Verfügung zu stellen, der einerseits aus einem leichten, gut recyclebaren Kunststoffmaterial bestehen soll und andererseits eine den Vorstellungen der Abnehmerschaft entsprechende äußerst geringe Dicke aufweist und dabei auch den technischen Anforderungen vollauf entspricht.

Zur Lösung dieser Aufgabe ist erfindungsgemäß eine Sonnenblende mit den Merkmalen des Anspruchs 1 vorgesehen.

Die Verwendung von EPP-Kunststoffmaterial erbringt die erwünschten Vorteile in bezug auf Gewicht und Recyclebarkeit, wurde aber erst nach Überwindung erheblicher Schwierigkeiten ermöglicht. Zunächst hat man erkennen müssen, daß ein Einbetten des Rohrkörpers im EPP-Material zu einer nicht vertretbaren Dicke des Sonnenblendenkörpers führt. Wie Versuche ergeben haben, konnte eine geschlossene Umhüllung des Rohrkörpers mit EPP-Material nur mit einer Wandungsdicke erreicht werden, die sich im Minimum aus dem 1,5-fachen der Perlengröße des EPP-Material ergibt und ca. vier mm beträgt. Mit einer solchen Wandungsdicke der Rohrkörperumhüllung konnte aber die erforderliche Festigkeit zwischen dem Rohrkörper und dem EPP-Material des Sonnenblendenkörpers nicht erreicht werden. Im Ergebnis fand man einen Sonnenblendenkörper vor, der zu dick war und dennoch den Festigkeitsanforderungen nicht entsprach. Erst durch das Zusammenwirken der im Anspruch 1 angegebenen Merkmale konnte eine Sonnenblende mit einem Sonnenblendenkörper gewünschter Dicke, Festigkeit und Recyclebarkeit geschaffen werden.

Die Maßnahme nach Anspruch 2 führt zu einer Sortengleichheit der Materialien und zu einer molekularen Verbindung bei der Sonnenblendenkörper-Herstellung. Die im Anspruch 3 angegebene Maßnahme kennzeichnet eine besonders einfache und kostengünstige Lösung zur Ausstattung des Rohrkörpers mit einem Überzug.

Die Maßnahme nach Anspruch 4 trägt wesentlich zur erleichterten Anbringung des Überzugs am Rohrkörper bei während die Maßnahme nach Anspruch 5 die Haftung des EPP-Materials am Überzug optimiert.

Ein Ausführungsbeispiel der Erfindung wird im folgenden anhand der Zeichnung näher erläutert, und es zeigen:
- Fig. 1: eine Sonnenblende in Ansicht,
- Fig. 2 - 4: Einzelheiten der Sonnenblende nach Fig. 1,
- Fig. 5: einen Schnitt A-A nach Fig. 1 und
- Fig. 6: den Schnitt wie Fig. 5 mit den Sonnenblendenkörper umgebenden Umhüllung.

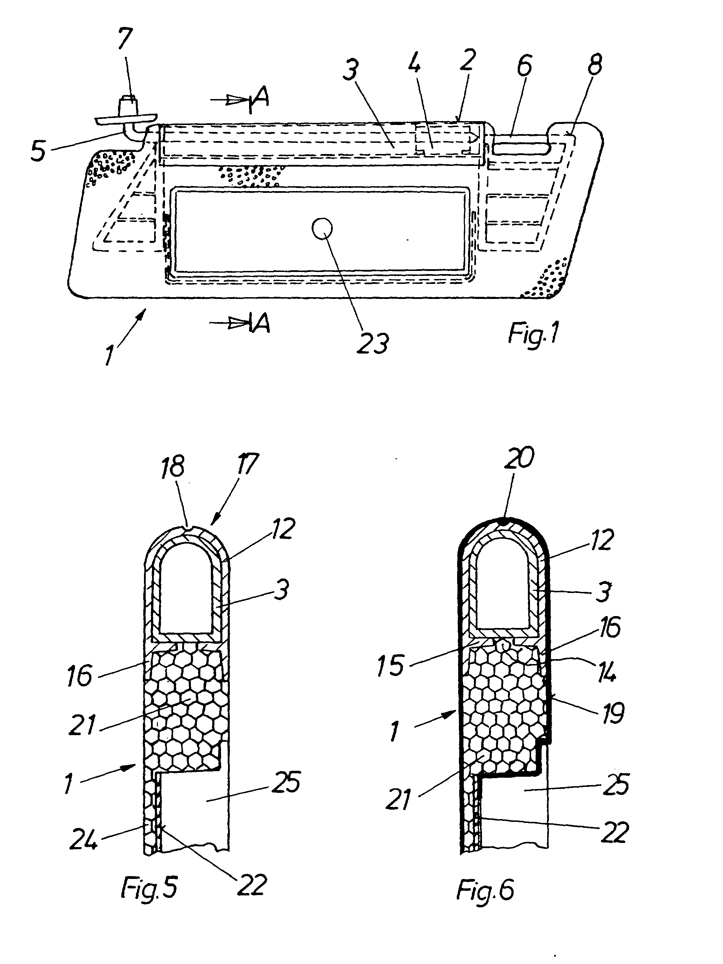

Die neue Sonnenblende nach Fig. 1 besteht aus einem Sonnenblendenkörper 1, der im Bereich seiner oberen Längskante 2 einen Rohrkörper 3 aufweist, in dem ein Gleitkörper 4 axial verschiebbar aufgenommen ist, welcher mit einer Achse 5 verbunden ist. Die Sonnenblende weist weiterhin einen Gegenlagerstift 6 zum Einrasten in ein nicht dargestelltes Gegenlager auf. Die Achse 5 besitzt eine etwa L-förmige Ausbildung, deren langer Schenkel vom Gleitkörper 4 und deren kurzer Schenkel von einem Schwenklagergehäuse 7 aufgenommen ist. Der Sonnenblendenkörper 1 ist üblicherweise auf dem langen Schenkel der Achse 5 in der aus Fig. 1 ersichtlichen Lage angeordnet. Damit der Sonnenblendenkörper 1 einen verbesserten Schutz vor einfallenden Sonnenstrahlen oder anderer Lichteinwirkung bieten kann, ist eine verschiebbare Anordnung desselben auf dem langen Schenkel der Achse 5 vorgesehen.

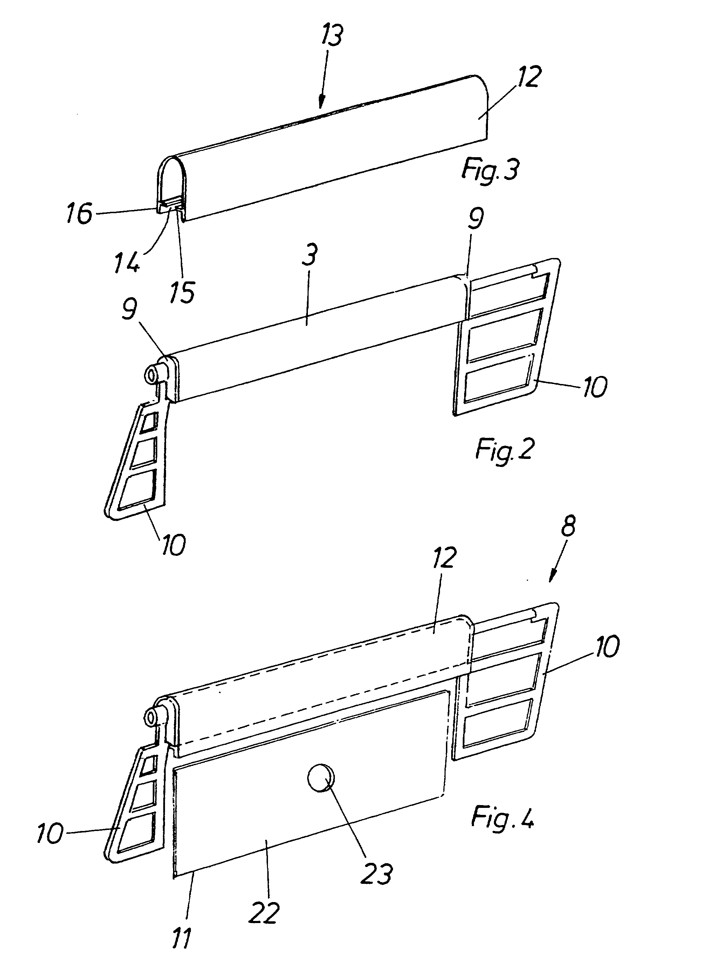

Der Sonnenblendenkörper 1 besteht aus EPP (expandierten Polypropylenpartikeln) und ist mit einer in Fig. 4 komplett dargestellten Einlage 8 ausgestattet. Die Einlage 8 umfaßt den bereits erwähnten Rohrkörper 3 aus Metall, wie Aluminium oder einer Aluminiumlegierung, endseitig an den Rohrkörper 3 über Stopfen 9 angeschlossene Kunststoffelemente 10 und ggf. eine Wannenboden-Versteifungsplatte 11.

Um einen Sonnenblendenkörper 1 mit geringstmöglicher Dicke herstellen zu können, ist der Rohrkörper 3 nicht vom EPP-Material umschlossen. Vielmehr weist der Rohrkörper 3 eine dem übrigen Sonnenblendenkörper 1 in etwa entsprechende Dicke auf oder er ist bevorzugt, wie in Fig. 5 und 6 gezeigt, geringfügig dünner als der Körper aus EPP-Material. Ein Überzug 12 umgibt den Rohrkörper 3, dessen Maße und Gestaltung vorgegeben sind. Durch den Überzug 12 erhält der Sonnenblendenkörper 1 eine gleiche Dicke und, was wesentlich ist, eine zuverlässige Verbindung zwischen dem Rohrkörper 3 und dem EPP-Material bei der Herstellung. Der Überzug 12, der aus PP (Polypropylen) besteht, wird aus dem Abschnitt 13 eines extrudierten Profilstrangs gebildet. Der Abschnitt 13 kann über den Rohrkörper 3 geschoben oder auf diesen aufgestülpt werden, wenn er mit einem durchlaufenden Längsschlitz 14 ausgebildet wird. Der PP-Überzug 12 ist mit seinen Innenmaßen auf die Außenmaße des Rohrkörpers 3 abgestimmt, um einen spielfreien Paßsitz zu gewährleisten.

Die komplette Einlage 3 wird für die Herstellung eines Sonnenblendenkörpers 1 in das Formnest einer Herstellungsvorrichtung in positionierter Anordnung eingelegt, wonach das Formnest mit Polypropylenpartikeln gefüllt und mit Heißdampf beaufschlagt wird. Dabei kommt es dazu, daß die Partikel expandieren und miteinander ebenso verschweißen wie mit dem Überzug 12, der damit eine absolut feste Verbindung mit dem EPP-Material eingeht. Durch am Überzug 12 angeformte Querstege 15 und Verlängerungsstege 16 wird die dafür zur Verfügung stehende Kontaktfläche noch wesentlich vergrößert.

Am äußeren Radiusbereich 17 des Überzugs 12 ist eine durchlaufende rinnenförmige Vertiefung 18 vorgesehen, die dazu dient, die beim umlaufenden Hochfrequenzschweißen der den Sonnenblendenkörper 1 umgebenden Umhüllung 19 entstehende Schweißraupe 20 aufzunehmen.

Unter Nutzung der EPP-Material- und Verarbeitungseigenschaften sowie Nutzung des Herstellungsprozesses von EPP-Körpern tritt eine molekulare Verbindung zwischen den EPP-Partikeln 21 und den Wandungen des PP-Überzugs 12 ein, womit die notwendige Verbindung geschaffen ist. Der PP-Überzug 12 bildet vorteilhafterweise auch eine notwendige Isolation zur Hochfrequenzelektrode beim Schweißen der Umhüllung 19.

Entsprechend den geschilderten Kritereien ist es möglich und vorteilhaft, die heutigen aufwendigen und teuren eingeschäumten Einlagen für eine Sonnenblendenkörperversteifung und Spiegelbefestigung im Wannenboden durch einen einfachen harten PP-Folienzuschnitt 22 als Wannenboden-Versteifung zu ersetzen. Der PP-Folienzuschnitt 22 ist mit einem Durchgangsloch 23 für eine EPP-Zufuhr über einen nicht gezeigten Injektor ausgebildet. Durch die molekulare Verbindung zwischen dem EPP-Material und dem PP-Material des Folienzuschnitts 22 ist ein dünner und dennoch ausreichend stabiler Wannenboden 24 zu verwirklichen. Die Ausnehmung 25 im Sonnenblendenkörper 1 dient zur Aufnahme eines Zubehörteils wie z.B. eine Spiegelbaueinheit.

## Patentansprüche

1. Sonnenblende für Fahrzeuge mit einem Sonnenblendenkörper (1) aus Kunststoffmaterial, der an einem Längsrandbereich (2) einen sich über seine wesentliche Längenausdehnung erstreckenden Rohrkörper (3) aus Metall, wie Aluminium aufweist, welcher den Sonnenblendenkörper (1) stabilisiert und als Führung für einen mit einer Achse (5) verbundenen Gleitkörper (4) dient, der für eine axiale Verschiebbarkeit des Sonnenblendenkörpers (1) vorgesehen ist, **dadurch gekennzeichnet, daß** als Kunststoffmaterial für den Sonnenblendenkörper (1) expandierte Polypropylenpartikeln, EPP, vorgesehen ist, daß die Breite des Rohrkörpers (3) gleich oder geringfügig kleiner als die Dicke des Sonnenblendenkörpers (1) ist, daß das EPP-Material sich nur an den der freien Längskante (2) des Sonnenblendenkörpers (1) abgewandten Wandungsbereich des Rohrkörpers (3) anschließt und daß der Rohrkörper (3) zwecks Gewährleistung einer festen Verbindung mit dem EPP-Material des Sonnenblendenkörpers (1) bei dessen Herstellung zumindest an dem am EPP-Material angrenzenden Wandungsbereich mit einem Überzug (12) versehen ist, der mit dem EPP-Material eine stoffschlüssige Verbindung einzugehen vermag.

2. Sonnenblende nach Anspruch 1, **dadurch gekennzeichnet, daß** der Überzug (12) aus PP-Material besteht.

3. Sonnenblende nach Anspruch 1 oder 2, **dadurch gekennzeichnet, daß** der Überzug (12) aus einem der Länge des Rohrkörpers (3) entsprechenden Abschnitt (13) eines extrudierten Profilstrangs besteht, der einen den Rohrkörper (3) aufnehmenden Öffnungsquerschnitt aufweist.

4. Sonnenblende nach wenigstens einem der Ansprüche 1 bis 3, **dadurch gekennzeichnet, daß** der Überzug (12) mit einem durchlaufenden Längsschlitz (14) ausgebildet und über den Rohrkörper (3) stülpbar ist.

5. Sonnenblende nach wenigstens einem der Ansprüche 1 bis 4, **dadurch gekennzeichnet, daß** der Überzug (12) mit den Rohrkörper (3) überragenden Stegen (16) ausgebildet ist, die eine Nut zur Aufnahme von EPP-Material und eine vergrößerte Kontaktfläche zum EPP-Material bilden.

## Claims

1. Sun visor for vehicles, having a plastics sun visor element (1) which, on a longitudinal marginal region (2), has a tubular element (3) made of metal, such as aluminium, and extending over its basic longitudinal extent, which tubular element stabilizes the sun visor element (1) and acts as a guide for a sliding element (4) which is connected to a shaft (5) and is designed for axial displaceability of the sun visor element (1), **characterized in that** as the plastics material for the sun visor element (1) expanded polypropylene particles, EPP, are envisaged, **in that** the width of the tubular element (3) is equal to or slightly less than the thickness of the sun visor element (1), **in that** the EPP material connects only to that wall region of the tubular element (3) facing away from the free longitudinal edge (2) of the sun visor element (1), and **in that** the tubular element (3), for the purpose of guaranteeing a fixed connection with the EPP material of the sun visor element (1), is provided at the time of its manufacture, at least on the wall region adjacent to the EPP material, with a cover (12), which cover is capable of entering into an integral connection with the EPP material.

2. Sun visor according to Claim 1, **characterized in that** the cover (12) consists of PP material.

3. Sun visor according to Claim 1 or 2, **characterized in that** the cover (12) consists of a portion (13) of an extruded profiled strand, which portion corresponds to the length of the tubular element (3) and has an apertural cross section which receives the tubular element (3).

4. Sun visor according to at least one of Claims 1 to 3, **characterized in that** the cover (12) is configured with a continuous longitudinal slot (14) and can be slipped over the tubular element (3).

5. Sun visor according to at least one of Claims 1 to 4, **characterized in that** the cover (12) is configured with webs (16) projecting over the tubular element (3), which webs form a groove for the reception of EPP material and an enlarged contact surface to the EPP material.

## Revendications

1. Pare-soleil pour véhicules avec un corps de pare-soleil (1) en matière plastique, qui présente sur une zone de bord longitudinal (2) un corps tubulaire (3) en un métal, comme l'aluminium, s'étendant sensiblement sur son extension longitudinale, qui stabilise le corps de pare-soleil (1) et qui sert de guide pour un corps glissant (4) assemblé à un axe (5), qui est prévu pour permettre une mobilité axiale du corps de pare-soleil (1), **caractérisé en ce qu'**il est prévu comme matière plastique pour le corps de pare-soleil (1) des particules de polypropylène expansées EPP, **en ce que** la largeur du corps tubulaire (3) est égale ou légèrement inférieure à l'épaisseur du corps de pare-soleil (1), **en ce que** la matière de EPP ne se rattache qu'à la zone de paroi du corps tubulaire (3) située à l'opposé de l'arête longitudinale libre (2) du corps de pare-soleil (1) et **en ce que** le corps tubulaire (3), pour garantir un assemblage solide avec la matière de EPP du corps de pare-soleil (1) lors de la fabrication de celui-ci, est pourvu au moins sur la zone de paroi adjacente à la matière de EPP d'un revêtement (12), qui permet de créer un assemblage matériel avec la matière de EPP.

2. Pare-soleil suivant la revendication 1, **caractérisé en ce que** le revêtement (12) se compose de matière de PP.

3. Pare-soleil suivant la revendication 1 ou 2, **caractérisé en ce que** le revêtement (12) se compose d'une partie (13) d'un cordon profilé extrudé, correspondant à la longueur du corps tubulaire (3), qui présente une section transversale d'ouverture reprenant le corps tubulaire (3).

4. Pare-soleil suivant au moins une des revendications 1 à 3, **caractérisé en ce que** le revêtement (12) est formé avec une fente longitudinale continue (14) et peut être emboîté sur le corps tubulaire (3).

5. Pare-soleil suivant au moins une des revendications 1 à 4, **caractérisé en ce que** le revêtement (12) est formé avec des nervures (16) dépassant le corps tubulaire (3), qui forment une rainure destinée à recevoir de la matière de EPP et une plus grande surface de contact pour la matière de EPP.
